# EUROPEAN PATENT APPLICATION

(11) **EP 3 040 553 A1**
(43) Date of publication of application: **06.07.2016**
(21) Application number: 15202842.9
(22) Date of filing: 28.12.2015
(51) Int. Cl.: F03D 80/70, F03D 15/10

(54) **WIND POWER GENERATION STATION AND GEARBOX**

(30) Priority: 29.12.2014 JP 2014266952
(71) Applicant: Hitachi, Ltd., Tokyo 100-8280 (JP)
(72) Inventor: TOBINAGA, Ikuo, Tokyo, 100-8280 (JP); AIKAWA, Shinichiro, Tokyo, 100-8280 (JP)
(74) Representative: MERH-IP Matias Erny Reichl Hoffmann Patentanwälte PartG mbB

(57) **Abstract**

To provide a high-reliability wind power generation station at a reduced cost by mounting a gearbox 4 with a relatively simple structure which is capable of taking advantage of merits of both of a lubricant bath method and a dry sump method.

Disclosed is a wind power generation station including: a rotor that includes a hub configured to convert wind power into rotational energy when wind blows against the hub, and a plurality of blades 1; a gearbox 4 configured to increase the rotational speed of the rotor; a generator 5 configured to convert the rotational energy, which is transmitted through the gearbox 4, into electric power; an oil tank configured to supply lubricant to the gearbox 4; and an oil circulation system configured to circulate the lubricant between the gearbox 4 and the oil tank 13. The oil circulation system includes at least an oil supply system and an oil drain system for each system. The oil supply system includes a pump that discharges the lubricant. The oil drain system includes an automatic valve 17 that is provided between the gearbox 4 and the oil tank 13, and is closed during a power failure.

## Description

### Technical Field

The present invention relates to a wind power generation station, particularly, to a gearbox of a wind power generation station.

### Background Art

In recent years, attention has been paid to a wind power generation station as a low-risk and environmentally friendly power generation method that does not emit greenhouse gases such as carbon dioxide, and is not exposed to radiation hazards compared to a thermal power plant or a nuclear power plant in the related art. In contrast, power generation cost is high, and it is necessary to further reduce the cost of the wind power generation station while ensuring safety.

In order to reduce the cost of the wind power generation station, the enlargement of a wind turbine has been progressed, and an installation location has been moved from a land site to an offshore site.

The drive system structure of the wind turbine is largely divided into structures with or without a gearbox. When the gearbox is provided, a relatively small generator is mounted in a nacelle so as to increase the rotational speed of a rotor. In contrast, when the gearbox is not provided, the structure of the wind turbine is relatively simple, but a large-sized generator is mounted on the outside of the nacelle in an exposed manner such that the large-sized generator generates electricity at the same rotational speed as that of the rotor.

Offshore wind power generation using the gearbox is a main stream, and partly, a hydraulic transmission instead of the gearbox being used.

The efficiency of the gearbox becomes a problem area in the enlargement of the wind turbine. The impact of heat loss is negligible as output increases, and the enlargement has an impact on a cooling device or the cost. An extra output equivalent to the loss is applied to the rotor, and thus the rotor requires extra strength.

Technology disclosed in PTL 1 is an example of the gearbox of the wind power generation station. PTL 1 discloses "the bearing lubricant supplying structure of the wind power generation station with a planetary gear type gearbox in which a planetary gear rotates, via a slide bearing, around a planetary pin (which serves as a rotating shaft) fixed to a carrier, in which the slide bearing is lubricated by supplying lubricant from a lubricant bath to a lower rotation region, and supplying the lubricant to an upper rotation region by injecting, via a nozzle, the lubricant that is pressure-fed from a lubricant source".

According to the bearing lubricant supplying structure of the wind power generation station, it is possible to reduce the number of components through the simplification of a lubricant supply method, and to reduce the cost through the simplification of an assembly structure.

### Citation List

### Patent Literature

[PTL 1] JP-A-2012-132333

### Summary of Invention

### Technical Problem

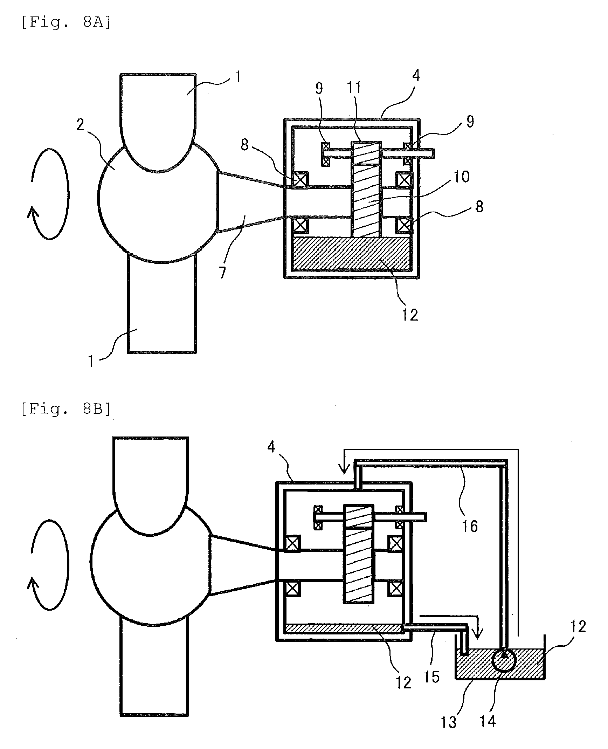

The efficiency of the gearbox of the large-sized wind turbine is improved by changing a lubricant supply method (refer to Fig. 8A) in the related art to a dry sump method (refer to Fig. 8B) so as to lubricate gears and bearings.

As illustrated in Fig. 8A, according to the lubricant bath method, a lubricant 12 stored in a gearbox 4 is pumped by the rotation of a gear 10 in the gearbox 4. The lubricant 12 is circulated without the aid of a pump, but the efficiency is relatively bad due to the occurrence of pumping loss.

In contrast, according to the dry sump method illustrated in Fig. 8B, a lubricant pump 14 supplies the lubricant 12 only to lubricant requiring portions from an oil tank 13 installed outside of a gearbox 4. Therefore, pumping loss for the lubricant is reduced, and the efficiency is good, but when necessary, the supply of the lubricant is required even during a power failure.

When the wind turbine is installed at an offshore site, a maintenance method during a power failure becomes a problem area. An installation project of the offshore wind turbine is a large-scale project, and thus a situation, in which the supply of electric power is stopped for a long period of time due to business trouble, occurs frequently. Even after the start of operation, the offshore wind turbine may stand by without the supply of electric power thereto for a long period of time due to a power failure or damage to an undersea cable, and a maintenance method becomes a problem area. As a countermeasure of these problems, typically, an emergency power supply device or a diesel powered generator is prepared.

As described above, when the gearbox is used and the lubricant bath method is adopted in the wind turbine, there is a problem such as the efficiency being bad, and particularly, the problem becomes magnified as the wind turbine is enlarged. The gearbox with the dry sump lubrication system has merits in that it is not necessary to pump the lubricant, and the efficiency is good; however, the gearbox requires a backup power source for supplying the lubricant to the gears and the bearings during a power failure.

The gearbox disclosed in PTL 1 has a lubricant supply structure in which both the lubricant bath method and the dry sump method are adopted, but has a problem such as the internal structure of the gearbox being complicated, and from the viewpoint of cost or maintenance.

An object of the present invention is to provide a high-reliability wind power generation station at a reduced cost by mounting a gearbox in the wind power generation station, with the gearbox having a relatively simple structure and being capable of taking advantage of merits of both of a lubricant bath method and a dry sump method.

Another object of the present invention is to provide the gearbox of the power wind generation station, which has a relatively simple structure and is capable of taking advantage of merits of both the lubricant bath method and the dry sump method.

### Solution to Problem

In order to solve the problems, according to an aspect of the present invention, there is provided a wind power generation station including: a rotor that includes a hub configured to convert wind power into rotational energy when wind blows against the hub, and a plurality of blades; a gearbox configured to increase the rotational speed of the rotor; a generator configured to convert the rotational energy, which is transmitted through the gearbox, into electric power; an oil tank configured to supply lubricant to the gearbox; and an oil circulation system configured to circulate the lubricant between the gearbox and the oil tank. The oil circulation system includes at least an oil supply system and an oil drain system for each system. The oil supply system includes a pump that discharges the lubricant. The oil drain system includes an automatic valve that is provided between the gearbox and the oil tank, and is closed during a power failure.

According to another aspect of the present invention, there is provided a gearbox mounted in a wind power generation station, the increaser including: an oil tank configured to supply lubricant to the gearbox; and an oil circulation system configured to circulate the lubricant between the gearbox and the oil tank. The oil circulation system includes at least an oil supply system and an oil drain system for each system. The oil supply system includes a pump configured to discharge the lubricant. The oil drain system includes an automatic valve that is provided between the gearbox and the oil tank, and is closed during a power failure.

### Advantageous Effects of Invention

According to the present invention, it is possible to realize the high-reliability wind power generation station at a reduced cost by mounting the gearbox in the wind power generation station, with the gearbox having a relatively simple structure and being capable of taking advantage of merits of both the lubricant bath method and the dry sump method.

According to the present invention, it is possible to realize the gearbox of the wind power generation station, which has a relatively simple structure and is capable of taking advantage of merits of both the lubricant bath method and the dry sump method.

Objects, configurations, and effects other than the aforementioned description are apparent from the description of examples given below.

### Brief Description of Drawings

[Fig. 1A] Fig. 1A is a view illustrating an outline of a gearbox of a wind power generation station in an embodiment of the present invention.
[Fig. 1B] Fig. 1B is a view illustrating an outline of the gearbox of the wind power generation station in the embodiment of the present invention.
[Fig. 2] Fig. 2 is a flowchart illustrating the operation of the gearbox of the wind power generation station in the embodiment of the present invention.
[Fig. 3A] Fig. 3A is a view illustrating an outline of the gearbox of the wind power generation station in the embodiment of the present invention.
[Fig. 3B] Fig. 3B is a view illustrating an outline of the gearbox of the wind power generation station in the embodiment of the present invention.
[Fig. 4A] Fig. 4A is a view illustrating an outline of the gearbox of the wind power generation station in the embodiment of the present invention.
[Fig. 4B] Fig. 4B is a view illustrating an outline of the gearbox of the wind power generation station in the embodiment of the present invention.
[Fig. 5A] Fig. 5A is a view illustrating an outline of the gearbox of the wind power generation station in the embodiment of the present invention.
[Fig. 5B] Fig. 5B is a view illustrating an outline of the gearbox of the wind power generation station in the embodiment of the present invention.
[Fig. 6A] Fig. 6A is a view illustrating an outline of the gearbox of the wind power generation station in the embodiment of the present invention.
[Fig. 6B] Fig. 6B is a view illustrating an outline of the gearbox of the wind power generation station in the embodiment of the present invention.
[Fig. 7] Fig. 7 is a view illustrating an outline of the entirety of the wind power generation station in the embodiment of the present invention.
[Fig. 8A] Fig. 8A is a view illustrating an outline of a gearbox of a wind power generation station in the related art.
[Fig. 8B] Fig. 8B is a view illustrating an outline of the gearbox of the wind power generation station in the related art.

### Description of Embodiments

Hereinafter, examples of the present invention will be described with reference to the accompanying drawings. In the drawings, the same reference signs are assigned to the same configuration elements, and the detailed descriptions thereof will be omitted.

### [Example 1]

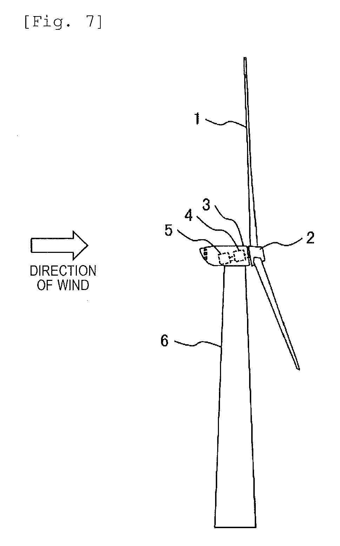

First, an outline of the entirety of a wind power generation station in the example will be described with reference to Fig. 7. The example is described focused mainly on a downwind type wind power generation station; however, the present invention is not limited to the downwind type wind power generation station, and similarly, can be applied to an upwind type wind power generation station. A wind power generation station installed on the ground has the same configuration as that of a wind power generation station installed offshore, and thus a description will be given without discriminating the wind power generation stations installed on the ground or offshore.

As illustrated in Fig. 7, in the wind power generation station of the example, a nacelle 3 is provided in an apex portion of a tower 6 installed on the ground or offshore, and a gearbox, that is, a gearbox 4 and a generator 5 are built into the nacelle 3.

A rotor is provided at one end of the nacelle 3, and is configured to include a hub 2 and a plurality of blades 1. The hub 2 is connected to the gearbox 4 and the generator 5 via a rotating shaft. The plurality of blades 1 rotate along with the hub 2 due to wind blowing against the blades 1 such that wind power is converted into rotational energy, the rotational energy is transmitted to the generator 5 via the rotating shaft and the gearbox 4, and electricity is generated.

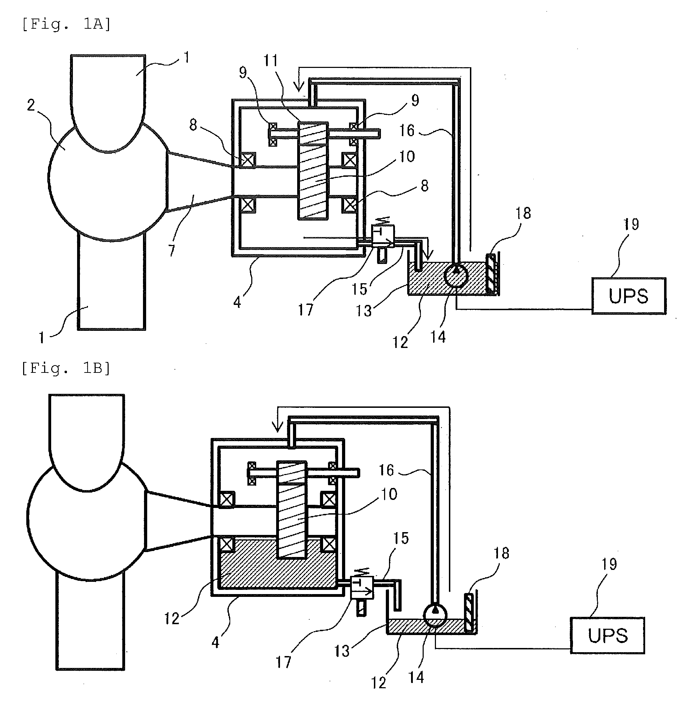

Hereinafter, the structure of the gearbox of the wind power generation station in the example will be described with reference to Figs. 1A and 1B. Fig. 1A illustrates a state of the gearbox and the vicinity of the gearbox during energization, that is, while electric power required to operate the wind power generation station is supplied. Fig. 1B illustrates a state of the gearbox and the vicinity of the gearbox during a power failure, that is, while electric power required to operate the wind power generation station is not supplied.

As illustrated in Fig. 1A, the gearbox 4 is connected to the rotor, which is configured to include the hub 2 and the plurality of blades 1, via a rotating shaft 7. The rotating shaft 7 is provided to pass through the inside of the gearbox 4.

In the gearbox 4, a relatively large gear 10 is attached to the rotating shaft 7. A plurality of bearings 8 are provided between the gearbox 4 and the rotating shaft 7 such that the rotating shaft 7 is capable of rotating relative to the gearbox 4 in a state where frictional resistance is applied much less therebetween.

A relatively small gear 11 is provided in the gearbox 4, and rotates as a pair of the gears 10. The rotation of the rotating shaft 7 is increased by a gear ratio between the gear 10 and the gear 11, and thus a rotational speed transmitted to the generator is increased, and power generation efficiency is improved. In order to reduce the frictional resistance of a rotating shaft against the gearbox 4, with the gear 11 being attached to the rotating shaft, a plurality of bearings 9 are provided between the gearbox 4 and a rotating shaft.

When the gear 10 and the gear 11 rotate while being in mesh with each other, due to friction therebetween, the gear 10 or the gear 11 may wear away, or frictional heat may occur in the gearbox 4. It is necessary to supply lubricant into the gearbox 4 to reduce as much friction as possible between the gears or between the gears and the bearings.

In the wind power generation station of the example, an oil tank 13 for storing lubricant 12 is provided outside of the gearbox 4. A lubricant pump 14 is provided in the oil tank 13 so as to supply the lubricant 12 to the gearbox 4. The lubricant pump 14 is connected to the gearbox 4 via an oil supply passage 16. The lubricant 12, which is discharged from the oil tank 13 by the lubricant pump 14, is injected into the gearbox 4 through the oil supply passage 16, and is applied to the gears, the bearings, and the like in the gearbox 4.

An oil drain passage 15 is provided in a bottom portion of the gearbox 4 such that the lubricant in the gearbox 4 drains into the oil tank 13. An automatic valve A17 is provided on the oil drain passage 15 between the gearbox 4 and the oil tank 13. A so-called normally-closed type valve is used as the automatic valve A17. The valve is opened during energization, and is closed during a power failure.

The lubricant pump 14 is connected to a backup power source 19 that supplies electric power to the lubricant pump 14 during a power failure. Even during a power failure, the lubricant pump 14 is capable of continuously supplying the lubricant 12 from the oil tank 13 to the gearbox 4 for a while. An uninterruptible power supply (UPS) or the like is used as the backup power source.

A level gauge 18 is provided in the oil tank 13, and is a sensor that detects the volume of the lubricant 12. The operation of the lubricant pump 14 is controlled according to the height of the level of the lubricant 12 detected by the level gauge 18.

As illustrated in Fig. 1A, in the wind power generation station of the example, during energization, the lubricant 12 is discharged from the oil tank 13 to the oil supply passage 16 by the lubricant pump 14. The lubricant, which is supplied to the gearbox 4 through the oil supply passage 16, is injected into the gearbox 4, and is applied to the gears or the bearings in the gearbox 4. Electric power is supplied to the automatic valve A17 of the oil drain passage 15 provided in the bottom portion of the gearbox 4, and thus the automatic valve A17 is opened, and the lubricant, which has fallen to the bottom portion of the gearbox 4, drains into the oil tank 13 through the oil drain passage 15.

That is, in the example, as described above, during energization, the gearbox of the wind power generation station is operated in a dry sump lubrication manner.

In contrast, as illustrated in Fig. 1B, electric power is not supplied to the automatic valve A17 of the oil drain passage 15 during a power failure, and thus the automatic valve A17 is closed.

The lubricant pump 14 is connected to the backup power source 19, and thus the lubricant pump 14 is continuously operated, and the lubricant 12 is continuously supplied from the oil tank 13 to the gearbox 4. Meanwhile, the automatic valve A17 of the oil drain passage 15 is closed, and thus the lubricant 12 accumulated in the bottom portion of the gearbox 4 does not drain into the oil tank 13, and is accumulated in the gearbox 4.

As a result, when the volume of the accumulated lubricant is greater than or equal to a predetermined value, a portion of the gear 10 is immersed in the lubricant 12, and the gearbox 4 is operated in a lubricant-bath lubrication manner.

As illustrated in Fig. 1B, the level gauge 18 is provided in the oil tank 13 so as to detect the level of the lubricant 12. The level of the lubricant 12 in the oil tank 13 is lower than or equal to a predetermined value, that is, when the volume of the lubricant 12 in the oil tank 13 is less than a predetermined value, the lubricant pump 14 is stopped such that more than the lubricant 12 needed is prevented from being supplied into the gearbox 4.

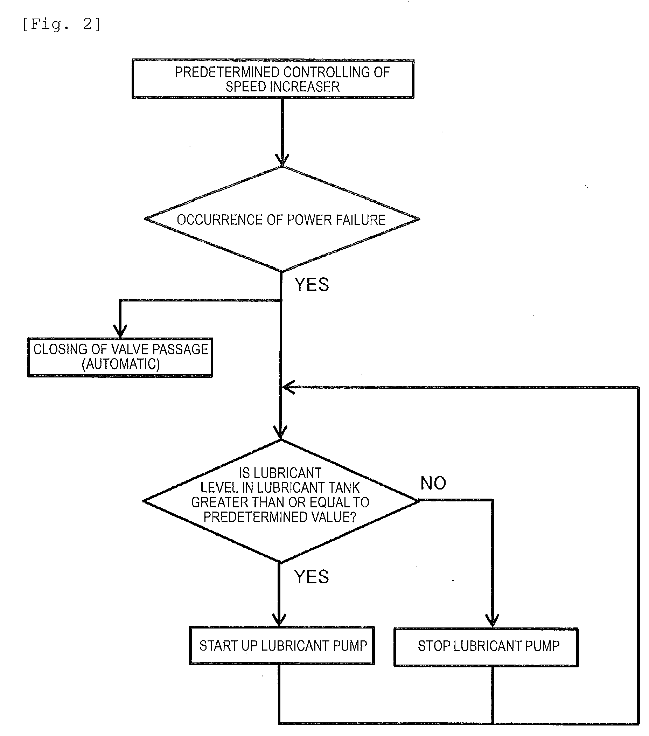

Fig. 2 is a flowchart illustrating the control of the operation of the lubricant pump 14 according to the level gauge 18. First, when a power failure occurs, the automatic valve A17 of the oil drain passage 15 is closed. (Closing of Valve Passage (Automatic))

Subsequently, the level of the lubricant 12 in the oil tank (lubricant tank) 13 is detected by the level gauge 18, and it is determined whether the level is greater than or equal to the predetermined value.

When it is determined that the level of the lubricant is greater than or equal to the predetermined value, the lubricant pump 14 is started up, and the lubricant 12 is continuously supplied into the gearbox 4 from the oil tank 13. In contrast, when it is determined that the level of the lubricant is less than or equal to the predetermined value, the lubricant pump 14 is stopped, and the supply of the lubricant 12 into the gearbox 4 from the oil tank 13 is stopped. Thereafter, the operation and the stopping of the lubricant pump 14 is controlled by continuously monitoring the level of the lubricant in the oil tank 13 using the level gauge 18, and continuously determining the position of an actual level relative to a predetermined level.

As described above, during energization, that is, when electric power required to operate the wind power generation station is supplied, the gearbox of the wind power generation station in the example is operated in a dry sump lubrication manner. The gearbox includes the oil tank and the lubricant pump outside of the gearbox, and the valve is provided at a lubricant drain port of the gearbox, and is closed when electric power is not supplied to the valve.

During a power failure, that is, when electric power required to operate the wind power generation station is not supplied, the gearbox is operated in a lubricant-bath lubrication manner. When the required volume of lubricant is supplied into the gearbox from the oil tank, a portion of the gears is immersed in the lubricant. The gearbox 4 has a structure in which the gearbox 4 is sufficiently sealed up to an increased level of the lubricant.

During a power failure, the lubricant pump is operated by the backup power source, and supplies the lubricant into the gearbox until the required volume of lubricant is stored in the gearbox. The volume of the lubricant is managed by the level gauge, and when the lubricant returns into the lubricant tank from the gearbox due to the leakage of the valve, and the volume of the lubricant in the gearbox is insufficient, the lubricant pump is intermittently operated.

The wind power generation station in the example is capable of taking advantage of merits of both the lubricant bath method and the dry sump method, and cancelling out the demerits thereof. That is, the gearbox is used by a dry sump method during a normal operation (energization), and thus the efficiency of the gearbox is high. The gearbox is operated by a lubricant bath method during a power failure, and thus it is possible to reduce the capacity of an emergency power source, that is, the backup power source.

Only the automatic valve A17 is added to this system from the viewpoint of hardware, and a decrease in the reliability of the entirety of the system almost does not occur.

As a result, it is possible to realize the high-reliability wind power generation station with a relatively simple structure at a reduced cost.

### [Example 2]

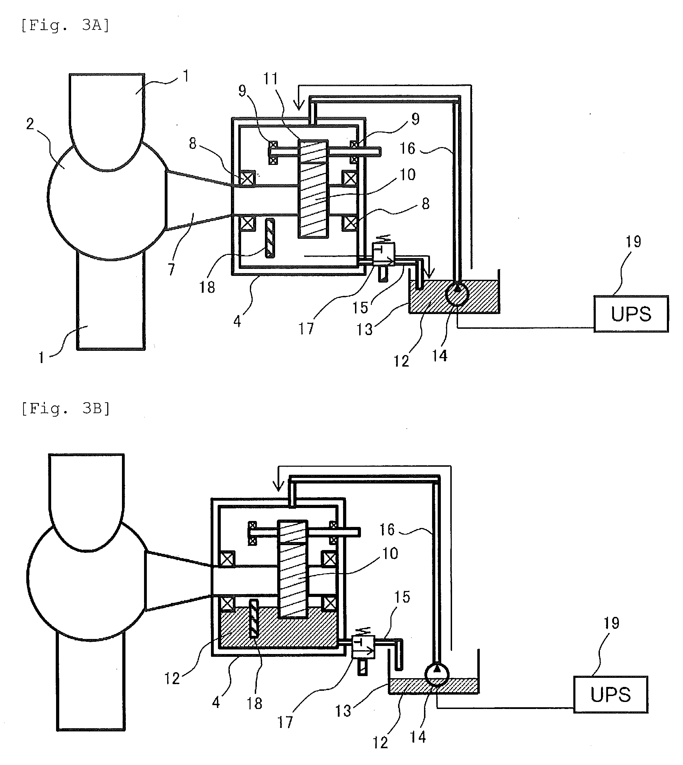

The structure of the gearbox of the wind power generation station in Example 2 will be described with reference to Figs. 3A and 3B. Fig. 3A illustrates a state of the gearbox and the vicinity of the gearbox during energization, that is, when electric power required to operate the wind power generation station is supplied. Fig. 3B illustrates a state of the gearbox and the vicinity of the gearbox during a power failure, that is, when electric power required to operate the wind power generation station is not supplied.

The wind power generation station in Example 2 is different from the wind power generation station in Example 1 in that the level gauge 18 for detecting the level of the lubricant 12 is provided in the gearbox 4.

In Example 1, as illustrated in Figs. 1A and 1B, the level gauge 18 is provided in the oil tank 13. In contrast, in Example 2, as illustrated in Figs. 3A and 3B, the level gauge 18 is provided in the gearbox 4. As described in Example 1, the operation of the lubricant pump 14 is controlled by using the level gauge 18 in the gearbox 4.

Typically, in many cases, a sensor like a level gauge is provided in the gearbox 4 so as to monitor the volume of the lubricant in the gearbox 4. In Example 2, it is possible to simplify the structure of the gearbox without an additional provision of a level gauge by using a level detection signal, which is supplied from the level gauge 18 already provided in the gearbox 4, for the controlling of the operation of the lubricant pump 14.

When the level gauge 18 is provided in the oil tank 13, it is possible to accurately monitor the suction of the lubricant pump 14, and in contrast, when'the level gauge 18 is provided in the gearbox 4 or a casing, it is possible to more accurately monitor an immersed state of the gear 10 of the gearbox 4.

Naturally, the level gauges 18 may be respectively provided in both the oil tank 13 and the gearbox 4, and may be used for the controlling of the operation of the lubricant pump 14.

### [Example 3]

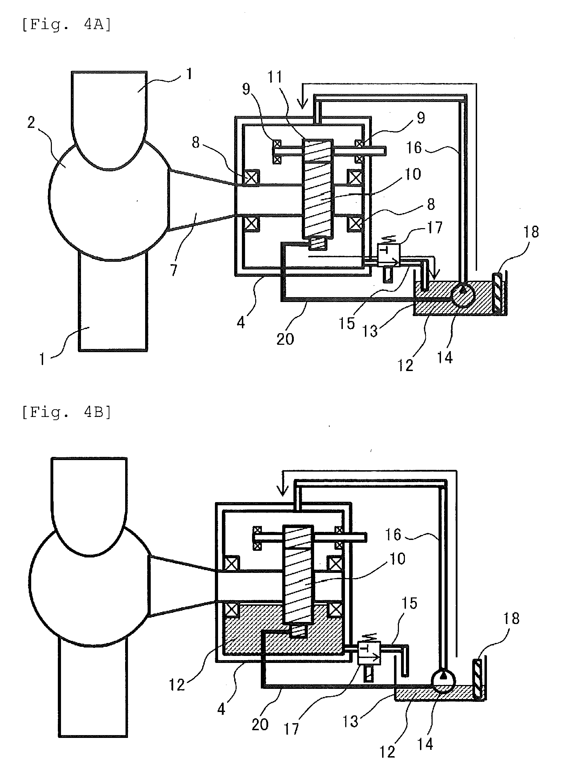

The structure of the gearbox of the wind power generation station in Example 3 will be described with reference to Figs. 4A and 4B. Fig. 4A illustrates a state of the gearbox and the vicinity of the gearbox during energization, that is, when electric power required to operate the wind power generation station is supplied. Fig. 4B illustrates a state of the gearbox and the vicinity of the gearbox during a power failure, that is, when electric power required to operate the wind power generation station is not supplied.

The wind power generation station in Example 3 is different from the wind power generation station in Example 1 in that drive force or electric power obtained from the rotation of the gear 10 in the gearbox 4 is supplied to the lubricant pump 14 instead of the backup power source which supplies electric power during a power failure.

In Example 1, as illustrated in Figs. 1A and 1B, the backup power source 19 is connected to the lubricant pump 14 so as to supply electric power during a power failure. In contrast, in Example 3, as illustrated in Figs. 4A and 4B, drive force or electric power obtained from the rotation of the gear 10 in the gearbox 4 is supplied to the lubricant pump 14 through a drive force transmission system 20. That is, the lubricant pump 14 is operated by a portion of rotational energy of the wind power generation station.

For example, in order to obtain drive force or electric power to drive the lubricant pump 14 from the rotation of the gear 10, a new gear is provided to mesh with the gear 10, and the rotation of the gear is transmitted to the lubricant pump 14 through the drive force transmission system 20 such that the lubricant pump 14 is operated. In this case, as the lubricant pump 14, a mechanical pump is used to mechanically discharge the lubricant 12 through rotation.

In addition, it is possible to operate the lubricant pump 14 by providing a small-sized generator, which meshes with the gear 10, in the gearbox 4, and transmitting electric power from the small-sized generator to the lubricant pump 14 through the drive force transmission system 20.

According to the configuration of Example 3, even during a power failure, it is possible to operate the lubricant pump 14 without providing the backup power source like a UPS.

### [Example 4]

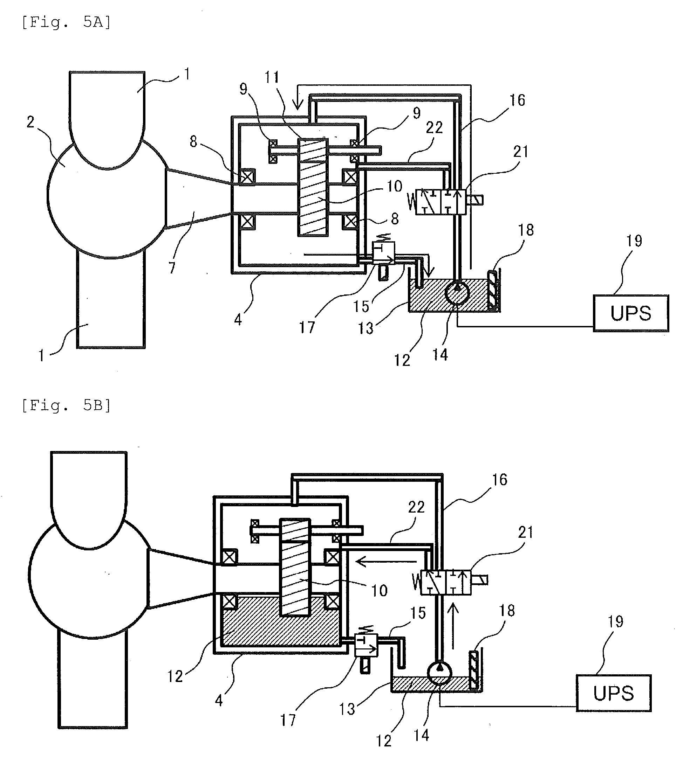

The structure of the gearbox of the wind power generation station in Example 4 will be described with reference to Figs. 5A and 5B. Fig. 5A illustrates a state of the gearbox and the vicinity of the gearbox during energization, that is, when electric power required to operate the wind power generation station is supplied. Fig. 5B illustrates a state of the gearbox and the vicinity of the gearbox during a power failure, that is, when electric power required to operate the wind power generation station is not supplied.

The wind power generation station in Example 4 is different from the wind power generation station in Example 1 in that an oil supply system, through which the lubricant 12 is supplied into the gearbox 4 from the oil tank 13, is formed of two systems, that is, an oil supply passage 16 and an oil supply passage 22. In addition, Example 4 is different from Example 1 in that an automatic valve (three-way valve) B21 is provided in the oil supply system.

As illustrated in Fig. 5A, during energization, that is, when electric power required to operate the wind power generation station is supplied, the automatic valve B21 is opened in such a way that the lubricant 12 flows through the oil supply passage 16. At this time, the lubricant 12 does not flow through the oil supply passage 22. The oil supply passage 16 is connected to an upper surface of the gearbox 4 so that the lubricant 12 is capable of flowing to an upper side of the gearbox 4.

In contrast, as illustrated in Fig. 5B, during a power failure, that is, when electric power required to operate the wind power generation station is not supplied, the automatic valve B21 is opened in such a way that the lubricant 12 flows through the oil supply passage 22. At this time, the lubricant 12 does not flow through the oil supply passage 16. The oil supply passage 22 is connected to the gearbox 4, and the connection position of the oil supply passage 22 is lower than that of the oil supply passage 16.

As described above, the wind power generation station in Example 4 has a structure in which the oil supply passage can be changed during energization and a power failure. During a power failure, the height of the supply passage of the lubricant 12 to the gearbox 4 is lowered, and as a result, it is possible to decrease the pump head of the lubricant pump 14, to supply the lubricant by using much less electric power or energy, and to reduce the capacity of a pump power source for a power failure, that is, the capacity of the backup power source.

For example, in addition to a method of lowering the position of the oil supply passage to a lower position as in the example, the following methods are effective in reducing the load of the lubricant pump 14: a method of decreasing pipe resistance by increasing a pipe diameter of the oil supply passage; a method of reducing the path of the oil supply passage as much as possible; and the like.

### [Example 5]

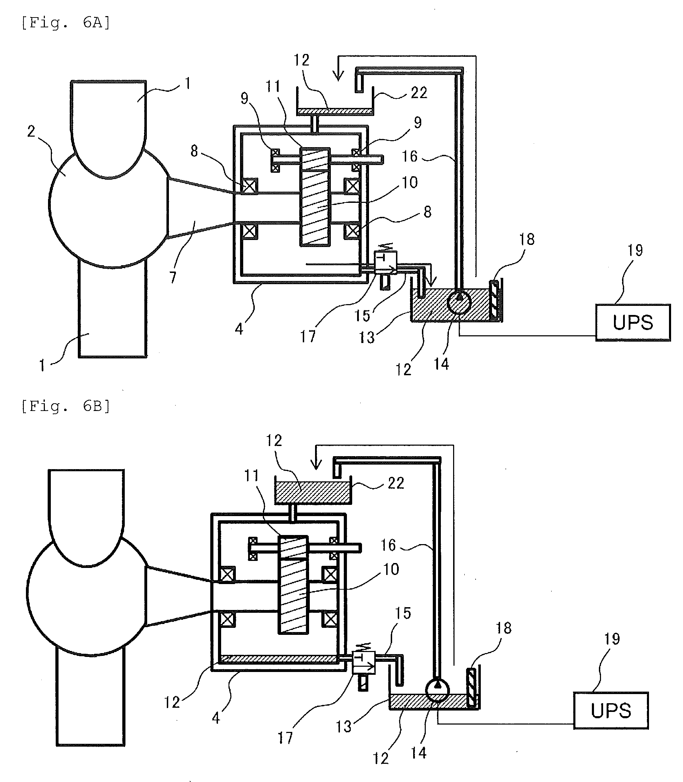

The structure of the gearbox of the wind power generation station in Example 5 will be described with reference to Figs. 6A and 6B. Fig. 6A illustrates a state of the gearbox and the vicinity of the gearbox during energization, that is, when electric power required to operate the wind power generation station is supplied. Fig. 6B illustrates a state of the gearbox and the vicinity of the gearbox during a power failure, that is, when electric power required to operate the wind power generation station is not supplied.

The wind power generation station in Example 5 is different from the wind power generation station in Example 1 in that an intermediate oil tank 22 is provided in the supply system (through which the lubricant 12 is supplied into the gearbox 4 from the oil tank 13) so as to be positioned higher than the gearbox 4 such that the lubricant 12 is capable of temporarily staying in the intermediate oil tank 22.

As illustrated in Fig. 6B, the intermediate oil tank 22 is provided in the system for the supply of the lubricant to the gearbox 4, and thus during a power failure, the lubricant 12 is capable of temporarily staying at a position higher than that of the gearbox 4. The lubricant 12 accumulated in the intermediate oil tank 22 is supplied into the gearbox 4 due to gravity.

According to the structure of the wind power generation station in Example 5, it is possible to reduce the capacity of the backup power source 19 that supplies electric power to the lubricant pump 14 during a power failure.

The present invention is not limited to these examples, and includes various modification examples. These examples have been described in detail for the purpose of easy description of the present invention, and the present invention is not limited to a case in which the entirety of the aforementioned configuration elements is included. A portion of the configuration elements of an example can be replaced with a portion of the configuration elements of another example, and the configuration elements of an example can be added to the configuration of another example. A portion of the configuration elements of each example can be added to, removed from, or replaced with a portion of the configuration elements of another example.

### Reference Signs List

1: BLADE
2: HUB
3: NACELLE
4: GEARBOX
5: GENERATOR
6: TOWER
7: ROTATING SHAFT
8, 9: BEARING
10, 11: GEAR
12: LUBRICANT
13: OIL TANK
14: LUBRICANT PUMP
15: OIL DRAIN PASSAGE
16, 22: OIL SUPPLY PASSAGE
17: AUTOMATIC VALVE A
18: LEVEL GAUGE
19: BACKUP POWER SOURCE (UPS)
20: DRIVE FORCE TRANSMISSION SYSTEM
21: AUTOMATIC VALVE B (THREE-WAY VALVE)
22: INTERMEDIATE OIL TANK

## Claims

1. A wind power generation station comprising:
a rotor that includes a hub configured to convert wind power into rotational energy when wind blows against the hub (2), and a plurality of blades (1);
a gearbox (4) configured to increase the rotational speed of the rotor;
a generator (5) configured to convert the rotational energy, which is transmitted through the gearbox (4), into electric power;
an oil tank (13) configured to supply lubricant to the gearbox (4); and
an oil circulation system configured to circulate the lubricant between the gearbox (4) and the oil tank (13),
wherein the oil circulation system includes at least an oil supply system and an oil drain system for each system,
wherein the oil supply system includes a pump that discharges the lubricant, and
wherein the oil drain system includes an automatic valve (17) that is provided between the gearbox (4) and the oil tank (13), and is closed during a power failure.

2. The wind power generation station according to claim 1,
wherein the oil tank (13) includes a sensor configured to detect the volume of the lubricant in the oil tank (13), and
wherein during a power failure, the operation of the pump is controlled according to the volume of the lubricant detected by the sensor.

3. The wind power generation station according to claim 1,
wherein the gearbox (4) includes a sensor configured to detect the volume of the lubricant in the gearbox (4), and
wherein during a power failure, the operation of the pump is controlled according to the volume of the lubricant detected by the sensor.

4. The wind power generation station according to at least one of the claims 1 to 3,
wherein the wind power generation station includes a backup power source (19) configured to supply electric power during a power failure, and
wherein during a power failure, electric power is supplied to the pump from the backup power source (19).

5. The wind power generation station according to at least one of the claims 1 to 3,
wherein at least during a power failure, the pump is operated by a portion of the rotational energy of the wind power generation station.

6. The wind power generation station according to at least one of the claims 1 to 5,
wherein the oil supply system includes a first oil supply system through which the lubricant is supplied to the gearbox (4), and a second oil supply system which is positioned to be lower than the first oil supply system, and through which the lubricant is supplied to the gearbox (4), and
wherein during a power failure, the oil supply system is switched from the first oil supply system to the second oil supply system by an automatic three-way valve (21) provided in the oil supply system.

7. The wind power generation station according to at least one of the claims 1 to 5,
wherein the oil supply system includes an intermediate oil tank (22) which is positioned to be higher than the gearbox (4), and in which the lubricant temporarily stays.

8. A gearbox (4) mounted in a wind power generation station, the increaser comprising:
an oil tank (13) configured to supply lubricant to the gearbox (4); and
an oil circulation system configured to circulate the lubricant between the gearbox and the oil tank (13),
wherein the oil circulation system includes at least an oil supply system and an oil drain system for each system,
wherein the oil supply system includes a pump configured to discharge the lubricant, and
wherein the oil drain system includes an automatic valve that is provided between the gearbox (4) and the oil tank (13), and is closed during a power failure.

9. The gearbox (4) according to claim 8,
wherein the oil tank includes a sensor configured to detect the volume of the lubricant in the oil tank (13), and
wherein during a power failure, the operation of the pump is controlled according to the volume of the lubricant detected by the sensor.

10. The gearbox (4) according to claim 8,
wherein the gearbox (4) includes a sensor configured to detect the volume of the lubricant in the gearbox (4), and
wherein during a power failure, the operation of the pump is controlled according to the volume of the lubricant detected by the sensor.

11. The gearbox (4) according to at least one of the claims 8 to 10,
wherein during a power failure, electric power is supplied to the pump from a backup power source (19).

12. The gearbox (4) according to at least one of the claims 8 to 10,
wherein at least during a power failure, the pump is operated by a portion of rotational energy generated by the wind power generation station in which the gearbox (4) is mounted.

13. The gearbox (4) according to at least one of the claims 8 to 12,
wherein the oil supply system includes a first oil supply system through which the lubricant is supplied to the gearbox (4), and a second oil supply system which is positioned to be lower than the first oil supply system, and through which the lubricant is supplied to the gearbox (4), and
wherein during a power failure, the oil supply system is switched from the first oil supply system to the second oil supply system by an automatic three-way valve provided in the oil supply system.

14. The gearbox (4) according to at least one of the claims 8 to 12,
wherein the oil supply system includes an intermediate oil tank (22) which is positioned to be higher than the gearbox (4), and in which the lubricant temporarily stays.
